# EUROPEAN PATENT SPECIFICATION

(11) **EP 2 428 386 B1**
(45) Date of publication and mention of the grant of the patent: **25.10.2017**
(21) Application number: 11180867.1
(22) Date of filing: 12.09.2011
(51) Int. Cl.: B60K 37/00, G01D 11/28

(54) **Vehicle meter device**
Fahrzeugmessvorrichtung
Dispositif de compteur de véhicule

(30) Priority: 14.09.2010 JP 2010205004
(43) Date of publication of application: 14.03.2012
(73) Proprietor: Honda Motor Co., Ltd., Tokyo 107-8556 (JP)
(72) Inventor: Inose, Koji, Saitama, 351-0193 (JP); Mori, Kazuhiko, Saitama, 351-0193 (JP); Kawasumi, Shinji, Saitama, 351-0193 (JP); Takimoto, Sachiko, Saitama, 351-0193 (JP); Takaishi, Yusuke, Saitama, 351-0193 (JP)
(74) Representative: Beder, Jens

(56) References cited:
- EP-A2- 1 908 677
- DE-A1- 4 433 150
- DE-A1- 19 541 875
- DE-A1- 19 844 316

## Description

The present invention relates to a vehicle meter device enabling an increase in flexibility in instrument layout.

As described in the following Patent Literature 1, illumination of the fuel gauge dial and the speedometer dial by the same light source is known for a reduction in cost of the meter device.

However, the technique described in JP-3302604 needs close placement of a fuel gauge and a speedometer and placement of a light source between the fuel gauge and the speedometer for adequate illumination of each instrument dial, resulting in a limited degree of flexibility in placement, design of each instrument. On the other hand, an increase in placement distance between the fuel gauge and the speedometer causes a reduction in light in a position away from the light source, resulting in variations in luminance.

The closest prior-art document EP-A-1 908 677 discloses the preamble of claim 1.

Therefore, the present invention has been made in light of disadvantageous problems in the related art, and provides a vehicle meter device allowing a reduction in variation in luminance and an increase in the flexibility in instrument placement.

This object is solved by the subject-matter of the independent claim 1. Several embodiments are defined by the dependent claims 2-11. According to the invention described in claim 1, since the light source is placed in a position near the first movement, the first scale area of the dial is brightly illuminated. Also, since the first reflectors are formed around the second movement, the light from the light source is positively reflected to brightly illuminate the second scale area. Even if the second movement is placed at a distance from the first movement and the light source, the bright illumination of the first scale area and the second scale area is achieved. Accordingly, the flexibility in placement of each movement is increased, while the bright illumination of the first scale area and the second scale area of each dial is made possible. As a result, reduced variation in luminance and increased flexibility in placement of the first instrument including the first movement and the first scale area and the second instrument including the second movement and the second scale area are made possible.

According to the invention described in claim 2, the light source is placed to allow the light to illuminate both sides of the second movement. This makes is possible to brightly illuminate the second scale area and prevent variation in luminance.

According to the invention described in claim 3, the light sources on the right and left sides of the first movement can illuminate light equally toward the first reflectors arranged rightward and leftward the second movement, resulting in prevention of variation in luminance and brighter illumination of the second scale area.

According to the invention described in claim 4, the area of the first reflectors facing the light sources can be increased, resulting in further positively reflection of the light source. Accordingly, the second scale area can be more brightly illuminated.

According to the invention described in claim 5, since the reflection area of the first reflectors is increased as the distance to the first movement is increased, light which increasingly diverging and weakening with an increase in distance from the light source can be positively reflected to prevent variation in luminance.

According to the invention described in claims 6 and 7, even when the warning light is provided between the light source and the first reflectors, the light from the light source can be incident on the first reflectors by changing the shape of the enclosure wall of the warning light, resulting in an improvement in flexibility in placement in the warning light.

According to the invention described in claim 8, the second reflector is used to guide the light to the surface of the dial, so that bright illumination of the second scale rear of the dial is achieved. Because of the second reflector, the reflected light reflected by the first reflectors is prevented from illuminating the rider, thus improving the visibility of the dial.

According to the invention described in claim 9, it is possible to spot illuminate a predetermined range in the second scale area, thus improving the visibility of the second scale area and also improving the design. Even if the reflected light from the second reflector is weak, the restriction window can be used to intentionally create a light and dark pattern on the surface of the dial, resulting in more modest variations in luminance.

According to the invention described in claim 10, since the reflected light can be forced to the restriction window, even if the reflected light from the second reflector is weak, the light is effectively guided to the restriction window to brightly illuminate the predetermined range of the second scale area.

According to the invention described in claim 11, since the light source is used as backlight to illuminate the first scale area and the light reflected after being emitted from the light source is used to illuminate the second scale area, even if, for example, the light source is one, it appears the use of two light sources, resulting in improvement in design and a reduction in cost.

Fig. 1 is a left side view schematically showing a scooter motorcycle which is one of the saddle-ride type vehicles, equipped with a vehicle meter device according to an embodiment.
Fig. 2 is an enlarge view of an essential part of the scooter motorcycle in Fig. 1.
Fig. 3 is a front view of a vehicle meter device.
Fig. 4 is an exploded perspective view of the vehicle meter device in Fig. 1.
Fig. 5 is a sectional view taken along the V-V line in Fig. 3.
Fig. 6 is a front view of a meter case of the vehicle meter device in Fig. 3.
Fig. 7 is a back view of a trimming member of the vehicle meter device in Fig. 3.
Fig. 8 is a sectional view of the vehicle meter device taken along the A-A line in Fig. 6.

A vehicle meter device related to the present invention will be described below in detail using a preferred embodiment with reference to the accompanying drawings.

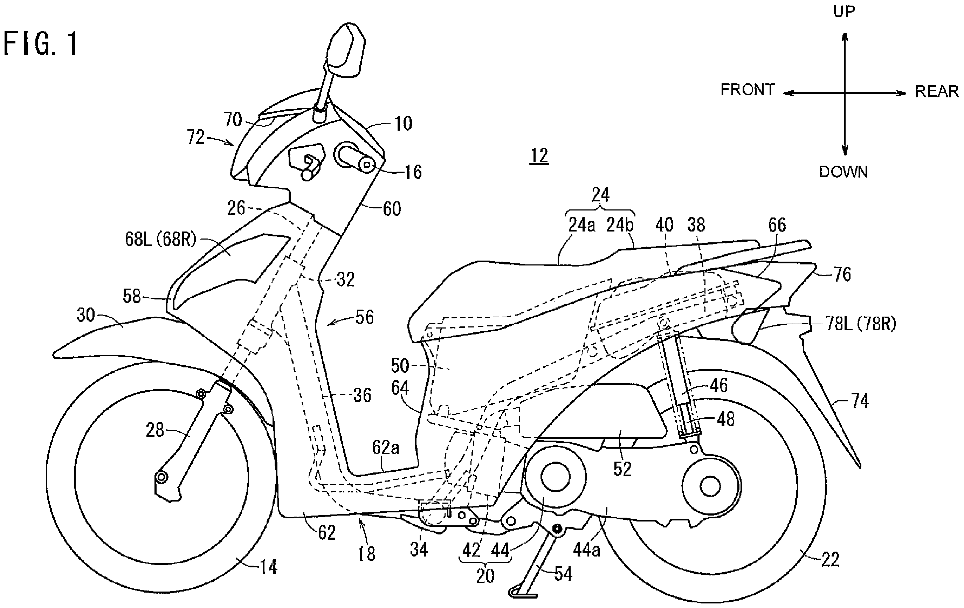

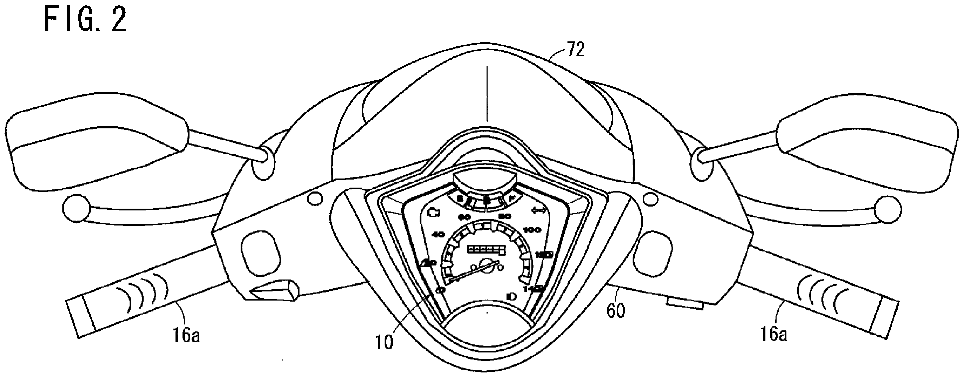

Fig. 1 is a left side view schematically showing a scooter motorcycle 12 which is one of the saddle-ride type vehicles, equipped with a vehicle meter device 10 according to an embodiment. Fig. 2 is an enlarge view of an essential part of the scooter motorcycle 12 in Fig. 1. Although in the embodiment the scooter motorcycle 12 is illustrated as an example for describing the present invention, it should be understood that the present invention is not limited to this example and the present invention is applicable to another type of motorcycle or a motor assisted bicycle lighting. Note that, in the scooter motorcycle (hereinafter simply referred to as the "motorcycle") 12, the letter "L" is added at the end of a reference numeral denoting a left one of the symmetrically located right and left mechanisms or component elements of the vehicle, and likewise the letter "R" is added at the end of a reference numeral denoting the right one. For the purpose of smoothly understanding the invention, unless otherwise specified, in Fig. 1, Fig. 2, the forward, rearward, upward, and downward directions are described with reference to the directions shown by the arrows in Fig. 1, and the leftward and rightward directions are described in accordance with the direction the rider on the seat of the vehicle views.

As illustrated in Fig. 1, the motorcycle 12 includes a front wheel 14 which is a steered wheel, a handlebar 16 for steering the front wheel 14, a vehicle frame 18 forming part of the vehicle, a unit swing engine 20 which is a drive source, a rear wheel 22 which is a drive wheel, a seat 24 and the like.

The front wheel 14 is mounted to the forward part of the vehicle and rotatably journaled to a pair of front fork 28 extending from the lower end of a steering shaft 26. A front fender 30 is attached to the front fork 28 to cover above the front wheel 14. The steering shaft 26 has a top end coupled to the handlebar 16, and an approximately intermediate part rotatably held by a head pipe 32 provided on the vehicle frame 18.

The handlebar 16 extends symmetrically about the part coupled to the steering shaft 26 leftward and rightward in the vehicle-width direction (see Fig. 2). Grips 16a held by the rider are mounted on both ends of the handlebar 16. The handlebar 16 is steered by the rider; thereby turning the front wheel 14 coupled thereto through the steering shaft 26 and the front fork 28.

The vehicle frame 18 includes a front-side frame 36 that extends downward and rearward from the head pipe 32 to a vehicle bottom portion and then bends at the vehicle bottom portion to extend to a support shaft 34 located around an intermediate portion of the vehicle in the fore-and-aft direction, and a rearside frame 38 that is swingably journaled to the support shaft 34 and extends in the upward-and-rearward direction of the vehicle. Around the intermediate portion in the fore-and-aft direction of the vehicle, the unit swing engine 20 is supported on the vehicle frame 18 and can swing in the up and down directions. In the rear portion of the vehicle, a fuel tank 40 is held by the vehicle frame 18 to supply fuel (gasoline) to the unit swing engine 20.

The unit swing engine 20 includes a water-cooled engine 42 having an approximately horizontal cylinder axis, and a belt continuously variable transmission 44 that continuously changes the power of the engine 42 by use of a transmission belt (not shown) and a movable pulley (not shown) for transmission to the rear wheel 22. The continuously variable transmission 44 operates the movable pulley in accordance with the operation of a transmission electric motor (not shown) to continuously change the transmission gear ratio. A transmission case 44a covers the outer periphery of the continuously variable transmission 44.

The rear wheel 22 is located rearward from the continuously variable transmission 44 and rotatably journaled to a rear cushion 46 and a swing arm 48. The rotational driving force is transmitted from the continuously variable transmission 44 to the rear wheel 22, so that the rear wheel 22 rotates as a drive wheel to propel the vehicle.

A seat 24 is provided in an area from an approximately intermediate portion to a rear portion of the vehicle body in the fore-and-aft direction of the vehicle body. A so-called tandem seat is employed for the seat 24 in the embodiment, including a front seat 24a for the rider and a rear seat 24b behind the front seat 24a for a pillion passenger. A carrier box 50 is provided under the seat 24 for accommodating luggage. The seat 24 also serve as a lid covering the upper opening of the carrier box 50, and the seat 24 is moved up forward to expose the interior space of the carrier box 50.

The fuel tank 40 is placed rearward from the carrier box 50, while an air cleaner 52 is disposed under the carrier box 50 for cleaning the exhaust gases from the engine 42.

Further, the motorcycle 12 is equipped with various electrical components mounted on the vehicle frame 18 on right side face of the carrier box 50 (i.e., the opposite side of the motorcycle 12 to the side shown in Fig. 1) for performing drive control on the unit swing engine 20 and the like.

The motorcycle 12 has a main stand 54 rotatably supported by the vehicle frame 18 under the unit swing engine 20. The main stand 54 is held approximately parallel to the road surface during running, and, during parking, the main stand 54 is erected at approximately right angles to the road surface to be moved away from the road surface to the air, so that the motorcycle 12 is made stand on its own.

In the motorcycle 12 a vehicle cover 56 forming the design face (external appearance) of the vehicle in the fore-and-aft direction of the vehicle is mounted over the vehicle frame 18, the steering shaft 26 and the like. The vehicle cover 56 is formed of polymeric materials such as, for example, acrylonitrile butadiene styrene (ABS), fiber reinforced plastics (FRP), polypropylene (PP) or the like, and covers the vehicle components such as the handlebar 16, the electrical components, a front portion of the unit swing engine 20, the fuel tank 40 and the like.

The vehicle cover 56 of the embodiment includes a front cover 58 covering the front of the steering shaft 26 and the top of the front wheel 14, a handlebar cover 60 placed on the front cover 58 to cover the handlebar 16, a floor center cover 62 forming a step floor 62a in the rear of the front cover 58, a body cover 64 placed below the seat 24, adjoined to the floor center cover 62 and extending rearward, and a rear cover 66 directly connected to the rear of the body cover 64. A pair of front indicators 68L, 68R having a flashing turn signal function are disposed on the front cover 58.

The handlebar cover 60 covers a top portion of the steering shaft 26 and a central portion of the handlebar 16, and a vehicle meter device 10 for showing the speed and the like which will be described later is joined to the top face of a rear portion of the handlebar cover 60 (see Fig. 2). The handlebar cover 60 is formed to aesthetically match the front cover 58. An opening 70 is formed in the front of the handlebar 60 and a headlight 72 described later is fitted into the opening 70.

In the floor center cover 62 the step floor 62a is formed into a flat shape to allow the rider to rest his feet during running. The body cover 64 extends upward and rearward from the floor center cover 62 to cover the front portion of the unit swing engine 20 placed under the seat 24, the electrical components, the carrier box 50 and the like in order to prevent each component from being exposed to the outside.

The rear cover 66 covers the fuel tank 40 and the like in the rear portion of the vehicle. A rear fender 74 is attached to a lower portion of the rear cover 66 and covers the rear wheel 22 from behind, and a license plate and the like are disposed on the rear fender 74. A tail lamp 76 and a pair of rear indicators 78L, 78R are disposed on the rear of the rear cover 66. The tail lamp 76 turns on and off in response to the brake operation of the rider. On the other hand, a pair of rear indicators 78L, 78R have a flashing turn signal function as in the case of a pair of front indicators 68L, 68R.

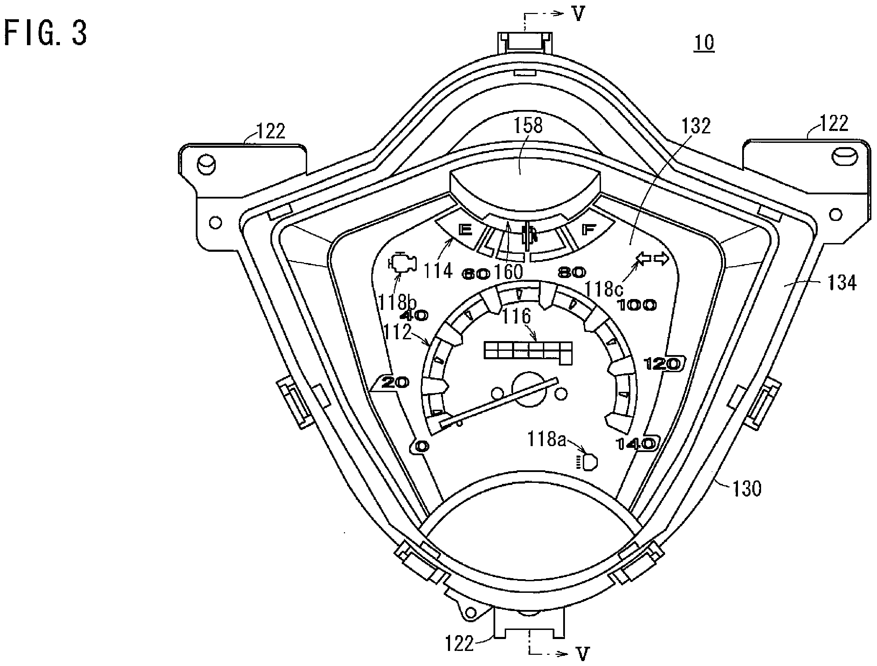

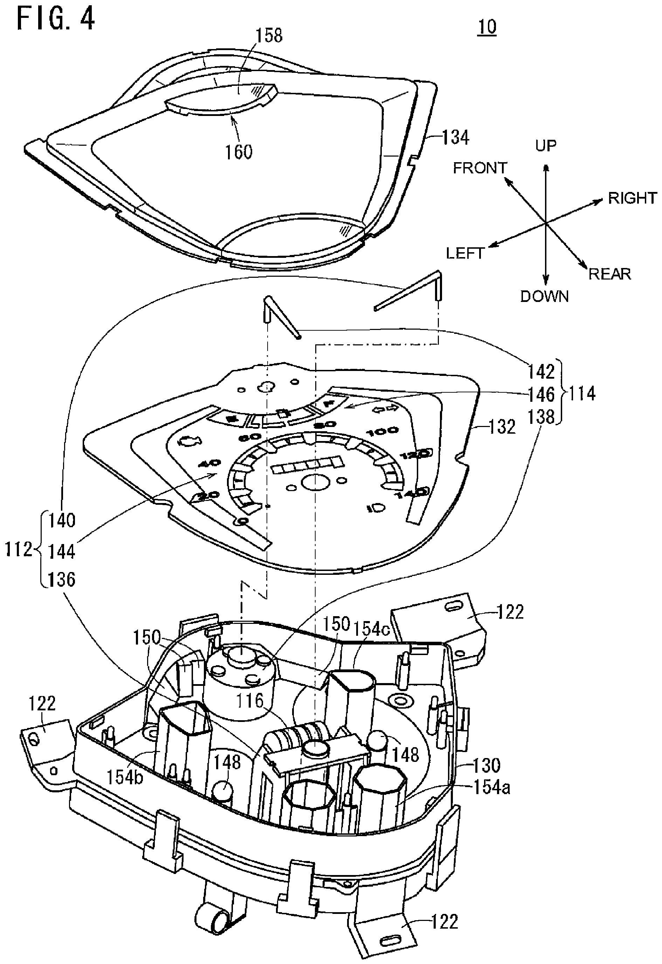

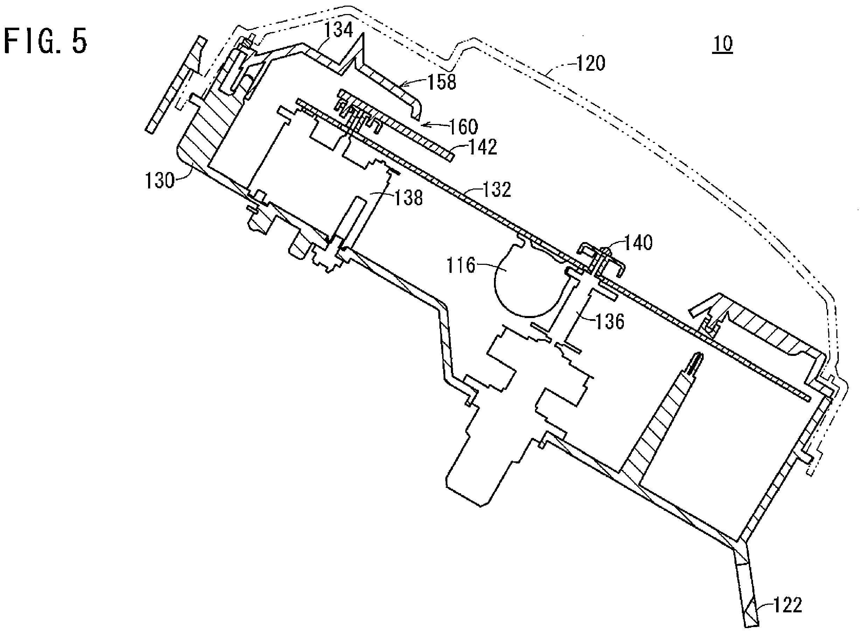

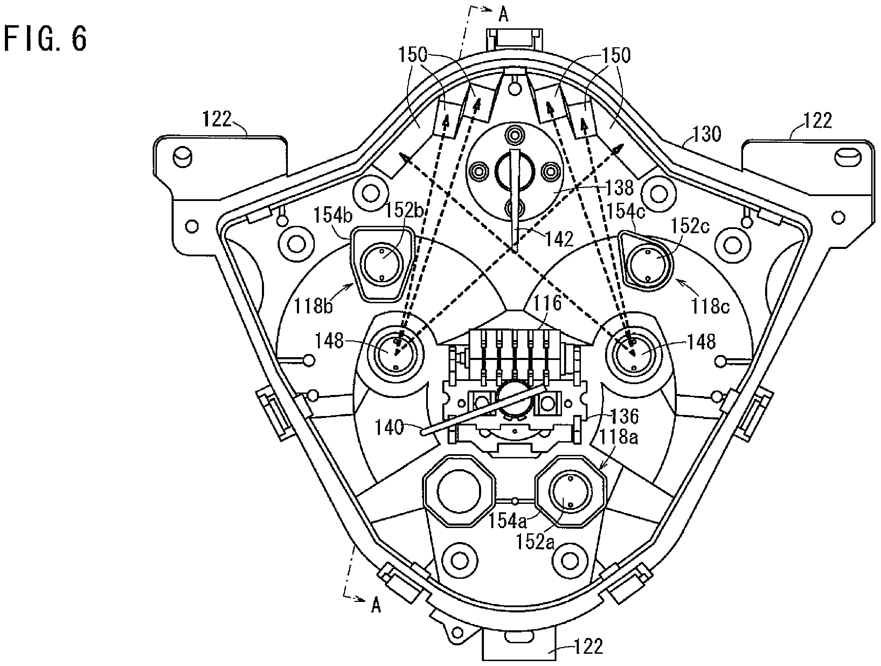

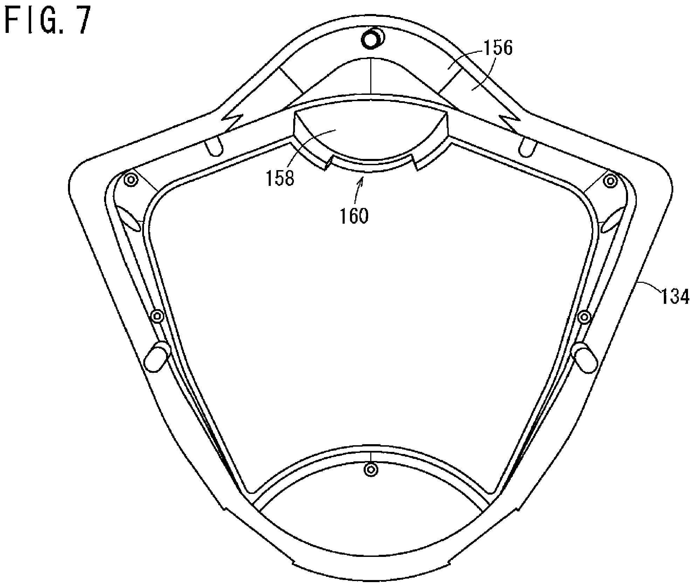

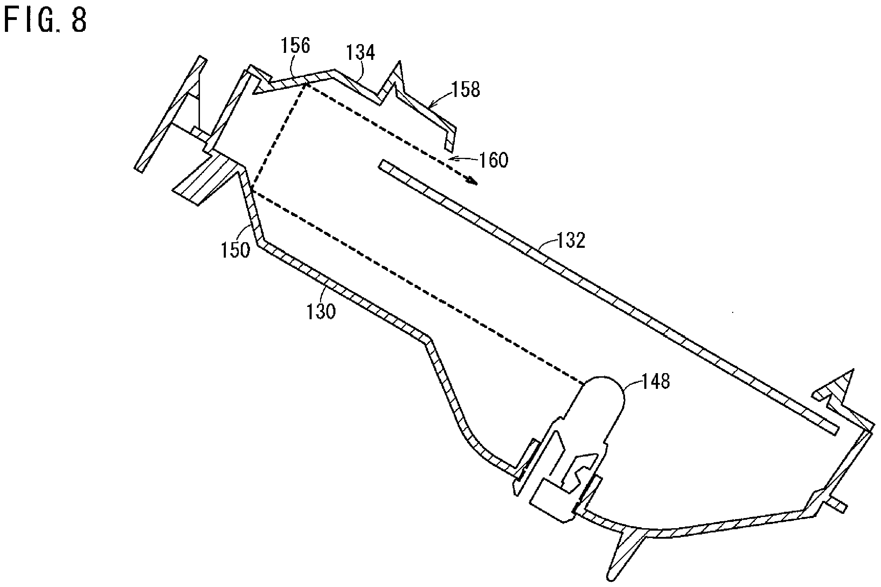

Fig. 3 is a front view of the vehicle meter device 10. Fig. 4 is a perspective exploded view of the vehicle meter device 10 in Fig. 3. Fig. 5 is a sectional view taken along the V-V line in Fig. 3. Fig. 6 is a front view of a meter case 130 of the vehicle meter device 10 in Fig. 3. Fig. 7 is a back view of a trimming member 134 of the vehicle meter device 10 in Fig. 3. Fig. 8 is a sectional view of the vehicle meter device 10 taken along the A-A line in Fig. 6. For the purpose of smoothly understanding the invention, unless otherwise specified, in Fig. 3 to Fig. 8, the forward, rearward, upward, downward, leftward and rightward directions are described with reference to the directions shown by the arrows in Fig. 4.

The vehicle meter device 10 is equipped with a speedometer (first instrument) 112 showing the vehicle speed, a fuel gauge (second instrument) 114 showing the amount of fuel remaining, a trip meter 116 showing the distance travelled, and warning light (turn indicator, FI indicator, high-beam indicator) 118. As illustrated in Fig. 5, a transparent cover 120 (omitted in Fig. 3, Fig. 4, Fig. 8) is attached to the top of the vehicle meter device 10. The vehicle meter device 10 is provided with mounting members 122 for mounting the vehicle meter device 10 to the handlebar cover 60.

The vehicle meter device 10 has a box-shaped meter case 130 having an upper open end, a dial 132 disposed on the opening of the open end of the meter case 130, and a trimming member 134 mounted around the opening of the meter case 130 and on the dial 132.

In the storage space defined by the meter case 130 and the back side of the dial 132, a first movement 136 for showing the vehicle speed and a second movement 138 for showing the amount of fuel remaining are disposed. The second movement 138 is placed forward from the first movement 136. A first needle 140 is fitted onto a shaft of the first movement 136 from above the dial 132, and the first movement 136 rotates the first needle 140. A second needle 142 is fitted onto a shaft provided at the center of the second movement 138 from above the dial 132, and the second movement 138 rotates the second needle 142.

The dial 132 includes a first scale area 144 on the surface of which a calibrated scale (speed scale) is displayed and indicated by the first movement 136, and a second scale area 146 on the surface of which a calibrated scale (fuel scale) is displayed and indicated by the second movement 138. The speedometer 112 includes the first movement 136, the first needle 140, and the first scale area 144, while the fuel gauge 114 includes the second movement 138, the second needle 142, and the second scale area 146. The first movement 136 rotates the first needle 140 according to a current vehicle speed, so that the speedometer 112 can display the current vehicle display to the rider. Likewise, the second movement 138 rotates the second needle 142 according to a current amount of fuel remaining, so that the fuel gauge 114 can display the current amount of fuel remaining to the rider.

Bulbs 148 are situated on the right and left sides of the first movement 136 and respectively disposed in positions near the first movement 136 (positions where the bulbs 148 can illuminate the first scale area 144 at a predetermined luminance). The bulbs 148 are the light source for illuminating the scale display of the first scale area 144 and the scale display of the second scale area 146. The right and left bulbs 148 are respectively disposed such that the distances from the right and left bulbs 148 to the center of the second movement 138 are equal to each other in order to brightly illuminate the second scale area 146 while preventing variations in luminance.

The first scale area 144 is formed of a light-transmission member allowing the light to pass through the member. The light emitted from the right and left bulbs 148 (illumination light) is incident upon the first scale area 144 from the back side of the dial 132, and then the incident light passes through the first scale area 144. In short, the right and left bulbs 148 function as a backlight of the speedometer 112. As a result, the rider can visually recognize the vehicle speed displayed on the speedometer 112 even in the nighttime.

A plurality of first reflectors 150 are formed around the second movement 138 and on the right and left sides of the second movement 138. The first reflectors 150 reflect the illumination light of the bulbs 148 toward the dial 132. The bulb 148 situated on the left side of the first movement 136 is disposed in a position where the illumination light emitted from this bulb is reflected toward the dial 132 by the first reflectors 150 located on the right and left of the second movement 138. Likewise, the bulb 148 situated on the right side of the first movement 136 is disposed in a position where the illumination light emitted from this bulb is reflected toward the dial 132 by the first reflectors 150 located on the right and left of the second movement 138. That is, since the bulbs 148 are disposed such that the light is illuminated to the opposite sides of the second movement 138, the amount of reflection light of the first reflectors 150 can be increased, thus preventing variations in luminance. The second scale area 146 is illuminated by use of the reflection light of the first reflectors 150, thus brightly illuminating the second scale area 146.

The plurality of first reflectors 150 are arranged in a staircase form such that the first reflectors 150 face the bulbs 148 located in the right and left sides of the first movement 136. Specifically, each of the first reflectors 150 is arranged on a plane different from that of the adjacent first reflector 150. As a result, the area of the reflectors facing the right and left bulbs 148 can be increased, and the illumination light from the bulbs 148 can be positively reflected. The longer the distance from the bulb 148 to the first reflector 150, the lower the amount of light incident onto the first reflector 150 becomes. Therefore, the amount of light reflected by the first reflectors 150 varies depending upon the position of the first reflector 150, resulting in variations in luminance. To avoid this, the reflection area of a first reflector 150 located far away from a center between the bulbs 148 (from the first movement 136) is designed to be greater than that of a first reflector 150 located closer to the center. As a result, the amount of light reflected by the first reflector 150 located far away the center between the bulbs 148 can be made equal to or closer to the amount of light reflected by the first reflector 150 located close to the center between the bulbs 148.

A warning light 118a having a warning light source 152a and an enclosure wall 154a surrounding the periphery of the light source 152a is disposed rightward and rearward from the first movement 136. Warning lights 118b, 118c, having light sources 152b, 152c and enclosure walls 154b, 154c surrounding the light sources 152b, 152c, are disposed between the bulbs 148 located on the right and left sides of the first movement 136 and the first reflector 150 located on the right and left sides of the second movement 138. Specifically, the warning light 118b is disposed between the bulb 148 on the left side of the first movement 136 and the first reflectors 150 on the left side of the second movement 138, while the warning light 118c is disposed between the bulb 148 on the right side of the first movement 136 and the first reflectors 150 on the right side of the second movement 13. The warning lights 118a, 118b, 118c are correctively called the waning light 118, and the light sources 152a, 152b, 152c are collectively called the light source 152 and the enclosure walls 154a, 154b, 154c are collectively called the enclosure wall 154.

The enclosure wall 154b of the warning wall 118b has a shape of not blocking the light which travels from the bulb 148 on the left side of the first movement 136 to the first reflectors 150 on the left side of the second movement 138, while the enclosure wall 154c of the warning wall 118c has a shape of not blocking the light which travels from the bulb 148 on the right side of the first movement 136 to the first reflectors 150 on the right side of the second movement 138. As a result, even if a warning light 118 is provided between the bulb 148 and the first reflectors 150, the illumination light emitted from the bulbs 148 can be successfully made incident onto the first reflectors 150 only by changing the shape of the enclosure wall 154 of the warning light 118, thus improving the flexibility in placement of the warning light 118.

A second reflector 156 is formed on the trimming member 134 above the first reflectors 150 for reflecting the illumination light reflected by the first reflectors 150, toward the surface of the dial 132. As a result, the second reflector 156 guides the light toward the surface of the dial 132 to brightly illuminate the second scale area 146 of the dial 132.

A shield 158 is provided on the trimming member 134 for obscuring the shaft of the second movement 138 and a restriction window 160 is provided in the shield 158. The second needle 142 moves within the range of the restriction window 160. Also, the restriction window 160 restricts the illuminating range of the illuminaiton light reflected by the second reflector 156 to within a predetermined range in the second scale area 146. This makes it possible to spot illuminate the predetermined range in the second scale area 146, thus improving the visibility of the second scale area 146 and also improving the design. The restriction window 160 can be used to intentionally create a light and dark pattern on the surface of the dial 132, resulting in modest variations in luminance. The second reflector 156 is provided on the trimming member 134 to face the restriction window 160 in order to brightly illuminate the second scale area 146, and reflects the light reflected by the first reflectors 150 so as to focus the light to the restriction window 160.

Because the vehicle meter device 10 has such a structure, the light emitted from the bulbs 148 travels through the first scale area 144 of the dial 132 to brightly illuminate the first scale area 144, so that variations in luminance do not easily occur. As shown in Fig. 8, the light emitted from the bulbs 148 is reflected toward the dial 132 by the first reflectors 150, and then the reflected light is reflected toward the surface of the dial 132 by the second reflector 156. As a result, the bulbs 148 are used to brightly illuminate the second scale area 146, resulting in less occurrence of variations in luminance.

In this manner, with the vehicle meter device 10 according to the embodiment, the bulbs 148 are disposed in positions near the first movement 136, the first reflectors 150 are provided around the second movement 138, and the second reflector 156 is provided above the first reflectors 150. For this reason, even if the second movement 138 is placed at a distance from the first movement 136 and the bulbs 148, bright illumination of the first scale area 144 and the second scale area 146 is made possible, resulting in reduced variation in luminance. Accordingly, as well as achieving the bright illumination of the first scale area 144 and the second scale area 146, an increase in flexibility in placement of the speedometer 112 and the fuel gauge 114 is achieved.

In the embodiment, the second reflector 156 is adapted to reflect the light reflected by the first reflectors 150 toward the surface of the dial 132, but the second reflector 156 may not be provided. That is, the second reflector 156 may not be formed on the trimming member 134. In this case, the second scale area 146 is formed of a light-transmission member allowing the light to pass through the member. Then, the illumination light emitted from the bulbs 148 is reflected off the first reflectors 150 to travel from the back side of the dial 132 into the second scale area 146. As a result, the light reflected by the first reflectors 150 travels through the second scale area 146, and then the light passing through the second scale area 146 is visually recognized by the rider. Even in such a structure, as well as achieving the bright illumination of the first scale area 144 and the second scale area 146, an increase in flexibility in placement of the speedometer 112 and the fuel gauge 114 is achieved.

The present invention has been described above using the preferred embodiment, but the technical scope of the present invention not limited to the scope described in the embodiment. It will be apparent to those skilled in the art that various changes or improvements can be added to the embodiment. It is clear from description of the scope of claims that forms with such changes or improvements added can be included in the technical scope of the present invention. Note that parenthesized reference signs described in claims are used following the reference signs in the accompanying drawings for the purpose of easier understanding of the present invention, and therefore it should be interpreted that the present invention is not limited to the elements with the reference signs.

10 ... Vehicle meter device
112 ... Speedometer
114 ... Fuel gauge
116 ... Trip meter
118 ... Warning light
130 ... Meter case
132 ... Dial
134 ... Trimming member
136 ... First movement
138 ... Second movement
140 ... First needle
142 ... Second needle
144 ... First scale area
146 ... Second scale area
148 ... Bulb
150 ... First reflector
152 ... Light source
154 ... Enclosure wall
156 ... Second reflector
158 ... Shield
160 ... restriction window

## Claims

1. A vehicle meter device (10), comprising:
a box-shaped meter case (130) having an upper open end;
a dial (132) attached to the opening of the meter case (130); and
a light source (148) and a plurality of movements (136, 138) placed in a storage space defined by the back side of the dial (132) and the meter case (130),
wherein: the plurality of movements (136, 138) include a first movement (136) and a second movement (138);
the dial (132) includes a first scale area (144) indicated by the first movement (136) and a second scale area (146) indicated by the second movement (138);
the light source (148) is disposed in a position near the first movement (136) for illumination of the first scale area (144);
**characterized in that**
the meter case (130) has a first reflector (150) formed around the second movement (138) ; and
illumination light from the light source (148) is reflected toward the dial (132) by the first reflector (150).

2. The vehicle meter device (10) according to claim 1, wherein
the light source (148) is placed in a position where illumination light from one the light source (148) is reflected by the first reflectors (150) placed on the right and left sides of the second movement (138).

3. The vehicle meter device (10) according to claim 1 or 2,
wherein: the at least one light source (148) comprises a plurality of the light sources (148), the light sources (148) being respectively placed in positions near the right and left sides of the first movement (136) ; and
the right and left light sources (148) are placed to have the same distance from each of the right and left light sources (148) to the center of the second movement (138).

4. The vehicle meter device (10) according to any of claims 1 to 3, wherein
the at least one first reflector (150) comprises a plurality of first reflectors (150) to form a stairs shape and face the light source (148).

5. The vehicle meter device (10) according to claim 4, wherein
a plurality of the first reflectors (150) formed in a stairs shape and placed in positions on the right and left sides of the second movement (138) are formed to increase in the reflection area with an increase in the distance from the first movement (136).

6. The vehicle meter device (10) according to any of claims 1 to 5,
wherein: a warning light (118) having a light source (152) for the warning light and an enclosure wall (154) covering the periphery of the light source (152) is placed between the light source (148) and the first reflector (150) ; and
the enclosure wall (154) has a shape of not blocking the light emitted from the light source (148) to the first reflector (150).

7. The vehicle meter device (10) according to claim 6,
wherein: the light sources (148) are respectively placed in positions near the right and left sides of the first movement (136) ;
the first reflectors (150) are placed on each of the right and left sides of the second movement (138) ;
the at least one warning light (118) comprises a plurality of the warning lights (118), the warning lights (118) being respectively placed in positions between the light source (148) on the left side of the first movement (136) and the first reflector (150) on the left side of the second movement (138), and between the light source (148) on the right side of the first movement (136) and the first reflector (150) on the right side of the second movement (138) ;
the enclosure wall (154) of the warning light (118) on the left side has a shape of not blocking the light emitted from the light source (148) on the left side of the first movement (136) to the first reflector (150) on the left side of the second movement (138) ; and
the enclosure wall (154) of the warning light (118) on the right side has a shape of not blocking the light emitted from the light source (148) on the right side of the first movement (136) to the first reflector (150) on the right side of the second movement (138).

8. The vehicle meter device (10) according to any on claims 1 to 7, wherein
a second reflector (156) is formed on a trimming member (134) in order to reflect the illumination light reflected by the first reflector (150) toward the surface of the dial (132), the trimming member (134) is placed above the first reflector (150), and the trimming member (134) is provided around the opening of the meter case (130).

9. The vehicle meter device (10) according to claim 8, wherein
a restriction window (160) is provided in the trimming member (134) in order to restrict the illumination range of the illumination light reflected by the second reflector (156) to within a predetermined range in the second scale area (146).

10. The vehicle meter device (10) according to claim 9, wherein
the second reflector (156) is formed facing the restriction window (160) to focus the reflected light to the restriction window (160).

11. The vehicle meter device (10) according to any of claims 1 to 10,
wherein: the first scale area (144) is displayed upon passage of the light emitted from the light source (148) functioning as a backlight through the first scale area (144) ; and
the second scale area (146) is displayed upon the reflected light from the light source (148) illuminating the surface of the dial (132).

## Patentansprüche

1. Fahrzeuginstrumentenvorrichtung (10), umfassend:
ein kastenförmiges Instrumentengehäuse (130), welches ein oberes offenes Ende hat;
ein Ziffernblatt (132), welches an der Öffnung des Instrumentengehäuses (130) angebracht ist; und
eine Lichtquelle (148) und eine Mehrzahl von Antriebselementen (136, 138), die in einem Lagerraum platziert sind, der durch die Rückseite des Ziffernblatts (132) und das Instrumentengehäuse (130) definiert ist,
wobei: die Mehrzahl von Antriebselementen (136, 138) ein erstes Antriebselement (136) und eine zweites Antriebselement (138) beinhalten;
das Ziffernblatt (132) einen ersten Skalenbereich (144), auf dem durch das erste Antriebselement (136) angezeigt wird, und einen zweiten Skalenbereich (146), auf dem durch das zweite Antriebselement (138) angezeigt wird beinhaltet;
die Lichtquelle (148) in einer Position nahe dem ersten Antriebselement (136) angeordnet ist, um den ersten Skalenbereich (144) zu beleuchten;
**dadurch gekennzeichnet, dass**
das Instrumentengehäuse (130) einen ersten Reflektor (150) hat, welcher um das erste Antriebselement (138) herum angeordnet ist; und
Beleuchtungslicht von der Lichtquelle (148) auf das Ziffernblatt (132) zu durch den ersten Reflektor (150) reflektiert wird.

2. Fahrzeuginstrumentenvorrichtung (10) gemäße Anspruch 1,
wobei die Lichtquelle (148) in einer Position platziert ist, in der Beleuchtungslicht von einer Lichtquelle (148) durch die ersten Reflektoren (150) reflektiert wird, die an der rechten und linken Seite des zweiten Antriebselements (138) platziert sind.

3. Fahrzeuginstrumentenvorrichtung (10) gemäß Anspruch 1 oder 2,
wobei: die wenigstens eine Lichtquelle (148) eine Mehrzahl von Lichtquellen (148) umfasst, wobei die Lichtquellen (148) jeweils an Positionen nahe der rechten und der linken Seite des ersten Antriebselements (136) positioniert sind; und
die rechte und linke Lichtquelle (148) platziert ist, um den selben Abstand von der rechten und der linken Quelle (148) zu dem Zentrum des zweiten Antriebselements (138) zu haben.

4. Fahrzeuginstrumentenvorrichtung (10) gemäß einem der Ansprüche 1 bis 3, wobei
der wenigstens eine erste Reflektor (150) eine Mehrzahl von ersten Reflektoren (150) umfasst, um eine Stufenform zu bilden und der Lichtquelle (148) zugewandt zu sein.

5. Fahrzeuginstrumentenvorrichtung (10) gemäß Anspruch 4, wobei eine Mehrzahl der ersten Reflektoren (150), die in einer Stufenform gebildet sind und an Positionen auf der linken und der rechten Seite des zweiten Antriebselements (138) platziert sind, so gebildet sind, dass sie in dem Reflexionsbereich ansteigen mit einem Anstieg mit zunehmender Entfernung von dem ersten Antriebselement (136).

6. Fahrzeuginstrumentenvorrichtung (10) gemäß einem der Ansprüche 1 bis 5,
wobei: eine Warnlampe (118), welche eine Lichtquelle (152) für die Warnlampe hat, und eine Einfassungswand (154), welche die Umgebung der Lichtquelle (152) abdeckt, zwischen der Lichtquelle (158) und dem ersten Reflektor (150) platziert ist; und
die Einfassungswand (154) eine Form hat, sodass sie das Licht, welches von der Lichtquelle (148) zu dem ersten Reflektor (150) hin emittiert wird, nicht blockt.

7. Fahrzeuginstrumentenvorrichtung (10) gemäß Anspruch 6,
wobei: die Lichtquelle (148) jeweils an Positionen nahe der rechten und der linken Seite des ersten Antriebselements (136) platziert sind;
die ersten Reflektoren (150) an jeder der rechten und linken Seite des zweiten Antriebselements (138) platziert sind;
die wenigstens eine Warnlampe (118) eine Mehrzahl von Warnlampen (118) umfasst, wobei die Warnlampen (118) jeweils an Positionen zwischen der Lichtquelle (148) auf der linken Seite des ersten Antriebselements (136) und dem ersten Reflektor (150) auf der linken Seite des zweiten Antriebselements (138), und zwischen der Lichtquelle (148) auf der rechten Seite des ersten Antriebselements (136) und dem ersten Reflektor (115) auf der rechten Seite des zweiten Antriebselements (138) platziert sind;
die Einfassungswand (154) der Warnlampe (118) auf der linken Seite eine Form hat, sodass sie das Licht, welches von der Lichtquelle (148) auf der linken Seite des ersten Antriebselements (136) zu dem ersten Reflektor (150) auf der linken Seite des zweiten Antriebselements (138) emittiert, nicht blockt; und
die Einfassungswand (154) der Warnlampe (158) auf der rechten Seite eine Form hat, sodass sie das Licht, das von der Lichtquelle (148) auf der rechten Seite des ersten Antriebselements (136) zu dem ersten Reflektor (150) auf der rechten Seite des zweiten Antriebselements (138) emittiert wird, nicht blockt.

8. Fahrzeuginstrumentenvorrichtung (10) gemäß einem der Ansprüche 1 bis 7, wobei
ein zweiter Reflektor (156) an einem Verzierungselement (134) gebildet ist, um das Beleuchtungslicht, welches durch den ersten Reflektor (150) reflektiert wird auf die Fläche des Ziffernblatts (132) zu reflektieren, wobei das Verzierungselement (134) über dem ersten Reflektor (150) platziert ist und das Verzierungselement (134) um die Öffnung des Instrumentengehäuses (130) vorgesehen ist.

9. Fahrzeuginstrumentenvorrichtung (10) gemäß Anspruch 8, wobei
ein Begrenzungsfenster (160) in dem Verzierungselement (134) vorgesehen ist, um den Beleuchtungsbereich des Beleuchtungslichts, welches durch den zweiten Reflektor (156) reflektiert wird, in einem vorgegebenen Bereich in dem zweiten Skalenbereich (146) zu begrenzen.

10. Fahrzeuginstrumentenvorrichtung (10) gemäß Anspruch 9,
wobei
der zweite Reflektor (156) so gebildet ist, dass er dem Begrenzungsfenster (160) zugewandt ist, um das reflektierte Licht zu dem Begrenzungsfenster (160) zu fokussieren.

11. Fahrzeuginstrumentenvorrichtung (10) gemäß einem der Ansprüche 1 bis 10,
wobei: der erste Skalenbereich (144) durch Durchgang des Lichts, welches von der Lichtquelle (148) emittiert wird, und das als Hintergrundlicht durch den ersten Skalenbereich (144)wirkt angezeigt wird; und
der zweite Skalenbereich (146) durch das reflektierte Licht von der Lichtquelle (148), welche die Fläche des Ziffernblatts (132) beleuchtet, angezeigt wird.

## Revendications

1. Dispositif de compteur de véhicule (10), comprenant :
un boîtier de compteur en forme de boîte (130) ayant une extrémité ouverte supérieure ;
un cadran (132) fixé à l'ouverture du boîtier de compteur (130) ; et
une source de lumière (148) et une pluralité de mouvements (136, 138) placés dans un espace de stockage défini par le côté arrière du cadran (132) et du boîtier de compteur (130),
dans lequel : la pluralité de mouvements (136, 138) comportent un premier mouvement (136) et un second mouvement (138) ;
le cadran (132) comporte une première zone d'échelle (144) indiquée par le premier mouvement (136) et une seconde zone d'échelle (146) indiquée par le second mouvement (138) ;
la source de lumière (148) est disposée dans une position près du premier mouvement (136) pour l'illumination de la première zone d'échelle (144) ;
**caractérisé en ce que**
le boîtier de compteur (130) a un premier réflecteur (150) formé autour du second mouvement (138) ; et
une lumière d'illumination provenant de la source de lumière (148) est réfléchie vers le cadran (132) par le premier réflecteur (150).

2. Dispositif de compteur de véhicule (10) selon la revendication 1, dans lequel
la source de lumière (148) est placée dans une position où une lumière d'illumination provenant de la source de lumière (148) est réfléchie par les premiers réflecteurs (150) placés sur les côtés droit et gauche du second mouvement (138).

3. Dispositif de compteur de véhicule (10) selon la revendication 1 ou 2,
dans lequel : l'au moins une source de lumière (148) comprend une pluralité des sources de lumière (148), les sources de lumière (148) étant placées respectivement dans des positions proches des côtés droit et gauche du premier mouvement (136) ; et
les sources de lumière droite et gauche (148) sont placées pour avoir la même distance depuis chacune des sources de lumière droite et gauche (148) au centre du second mouvement (138).

4. Dispositif de compteur de véhicule (10) selon l'une quelconque des revendications 1 à 3, dans lequel
l'au moins un premier réflecteur (150) comprend une pluralité de premiers réflecteurs (150) pour former une forme d'escalier et faire face à la source de lumière (148).

5. Dispositif de compteur de véhicule (10) selon la revendication 4, dans lequel
une pluralité des premiers réflecteurs (150) formés en forme d'escalier et placés dans des positions sur les côtés droit et gauche du second mouvement (138) sont formés pour augmenter dans la zone de réflexion avec une augmentation de la distance du premier mouvement (136).

6. Dispositif de compteur de véhicule (10) selon l'une quelconque des revendications 1 à 5,
dans lequel : une lumière d'avertissement (118) ayant une source de lumière (152) pour la lumière d'avertissement et une paroi d'enceinte (154) couvrant la périphérie de la source de lumière (152) est placée entre la source de lumière (148) et le premier réflecteur (150) ; et
la paroi d'enceinte (154) a une forme ne bloquant pas la lumière émise depuis la source de lumière (148) vers le premier réflecteur (150).

7. Dispositif de compteur de véhicule (10) selon la revendication 6,
dans lequel : les sources de lumière (148) sont placées respectivement dans des positions proches des côtés droit et gauche du premier mouvement (136) ;
les premiers réflecteurs (150) sont placés sur chacun des côtés droit et gauche du second mouvement (138) ;
l'au moins une lumière d'avertissement (118) comprend une pluralité des lumières d'avertissement (118), les lumières d'avertissement (118) étant placées respectivement dans des positions entre la source de lumière (148) sur le côté gauche du premier mouvement (136) et le premier réflecteur (150) sur le côté gauche du second mouvement (138), et entre la source de lumière (148) sur le côté droit du premier mouvement (136) et le premier réflecteur (150) sur le côté droit du second mouvement (138) ;
la paroi d'enceinte (154) de la lumière d'avertissement (118) sur le côté gauche a une forme ne bloquant pas la lumière émise depuis la source de lumière (148) sur le côté gauche du premier mouvement (136) vers le premier réflecteur (150) sur le côté gauche du second mouvement (138) ; et
la paroi d'enceinte (154) de la lumière d'avertissement (118) sur le côté droit a une forme ne bloquant pas la lumière émise depuis la source de lumière (148) sur le côté droit du premier mouvement (136) vers le premier réflecteur (150) sur le côté droit du second mouvement (138).

8. Dispositif de compteur de véhicule (10) selon l'une quelconque des revendications 1 à 7, dans lequel
un second réflecteur (156) est formé sur un organe de garniture (134) afin de réfléchir la lumière d'illumination réfléchie par le premier réflecteur (150) vers la surface du cadran (132), l'organe de garniture (134) est placé au-dessus du premier réflecteur (150), et l'organe de garniture (134) est prévu autour de l'ouverture du boîtier de compteur (130).

9. Dispositif de compteur de véhicule (10) selon la revendication 8, dans lequel
une fenêtre de restriction (160) est prévue dans l'organe de garniture (134) afin de restreindre la plage d'illumination de la lumière d'illumination réfléchie par le second réflecteur (156) dans une plage prédéterminée dans la seconde zone d'échelle (146).

10. Dispositif de compteur de véhicule (10) selon la revendication 9, dans lequel
le second réflecteur (156) est formé faisant face à la fenêtre de restriction (160) pour focaliser la lumière réfléchie sur la fenêtre de restriction (160).

11. Dispositif de compteur de véhicule (10) selon l'une quelconque des revendications 1 à 10,
dans lequel : la première zone d'échelle (144) est affichée lors du passage de la lumière émise depuis la source de lumière (148) fonctionnant en tant que rétroéclairage à travers la première zone d'échelle (144) ; et
la seconde zone d'échelle (146) est affichée lorsque la lumière réfléchie provenant de la source de lumière (148) illumine la surface du cadran (132).
